# EUROPÄISCHE PATENTSCHRIFT

(11) **EP 2 371 223 B1**
(45) Veröffentlichungstag und Bekanntmachung des Hinweises auf die Patenterteilung: **11.05.2016**
(21) Anmeldenummer: 10003668.0
(22) Anmeldetag: 01.04.2010
(51) Int. Cl.: A22C 11/02

(54) **Wursthüllenbremse und Verfahren zum Einstellen der Wursthüllenbremse**
Sausage casing brake and method for adjusting same
Freins pour boyaux de saucisses et procédé de réglage d'un frein pour boyaux de saucisses

(43) Veröffentlichungstag der Anmeldung: 05.10.2011
(73) Patentinhaber: Albert Handtmann Maschinenfabrik GmbH & Co. KG, 88400 Biberach (DE)
(72) Erfinder: Kibler, Armin, 88436 Eberhardzell (DE); Maile, Bernd, 88422 Oggelshausen (DE); Waizenegger, Thomas, 88444 Ummendorf (DE)
(74) Vertreter: Grünecker Patent- und Rechtsanwälte PartG mbB

(56) Entgegenhaltungen:
- EP-A1- 0 247 462
- EP-A1- 1 886 572
- DE-A1- 3 427 745
- GB-A- 1 443 487
- US-A1- 2002 011 730

## Beschreibung

Die Erfindung betrifft eine Wursthüllenbremse sowie ein Verfahren zum Einstellen einer solchen Wursthüllenbremse.

Die EP 1 886 572 A1 zeigt eine Wursthüllenbremse gemäß dem Oberbegriff des Anspruchs 1. Diese Druckschrift zeigt eine während der Produktion einstellbare Wursthüllenbremse mit zwei Schalen. Die Schalen sind so angeordnet, dass sie nicht auseinanderfallen.

Die DE 34 27 745 A1 zeigt eine Anschlusskupplung für Behälter mit einer Umfangsnut und einem Kupplungszapfen sowie einem Drehgriff zum Lösen der Anschlusskupplung.

Bei der maschinellen Wurstproduktion wird zunächst die Wursthülle auf das Füllrohr am Maschinenauslauf aufgebracht. Dann wird die Wursthüllenbremse am Füllrohrende positioniert.

Wursthüllenbremsen werden eingesetzt, um die Wursthülle beim Füllen mit Masse (z. B. Wurstbrät) an der Füllstelle, d. h. am Füllrohrende, unter Spannung zu halten. Dies ist Voraussetzung für die Produktion qualitativ hochwertiger, praller Würste. Lässt sich die Wursthülle dagegen während dem Füllvorgang zu leicht vom Füllrohr abziehen, so erhält man einen schlechten Befüllungsgrad.

Daneben unterstützt die Wursthüllenbremse ein Mitdrehen der noch ungefüllten Wursthülle auf dem Füllrohr während dem Abdrehvorgang. Der bereits gefüllte Teil der Wursthülle dagegen dreht sich währenddessen massenträgheitsbedingt nicht mit, bzw. wird festgehalten. Durch diese Relativbewegung wird eine Abdrehstelle am Ort der Wursthüllenbremse erzeugt, d. h. die Wurst portionsgerecht geformt.

Eine solche Wursthüllenbremse mit einem Bremsgummi, der von außen die Wursthülle auf das Füllrohr drückt, ist bereits aus der EP 0247462 bekannt. In den Fig. 12 und 13 ist eine entsprechende Darmbremse gezeigt. Der Bremsgummi 1 ist Bestandteil der Wursthüllenbremse. Die Dichtlippe des Bremsgummis ist nach innen zum Füllrohr gerichtet. Der konische Bremsgummi wird zwischen zwei Schalen 2 und 3 axial verspannt. Dies erfolgt üblicherweise über ein Gewinde zwischen den Schalen. Durch Verspannen des Bremsgummis über eine Schräge kann der Durchmesser der Dichtlippe verändert und somit die Bremskraft eingestellt werden. Aufgrund der hohen Dynamik besteht beim Start/Stopp die Gefahr, dass die Einstellung der sich drehenden Teile sich während der Produktion, bedingt durch die Massenträgheit, verändert. Eine Veränderung der Bremsvorspannung ist jedoch unbedingt zu vermeiden. Deshalb wird die Einstellung in der Regel schwergängig ausgeführt. Üblicherweise wird durch einen Gummiring R die Reibung im Gewinde so weit erhöht, dass ein massenträgheitsbedingtes Verstellen nicht mehr möglich ist. Dadurch ist ein einfaches Einstellen von Hand ohne ein spezielles Werkzeug allerdings auch nicht mehr möglich.

Hiervon ausgehend liegt der vorliegenden Erfindung die Aufgabe zugrunde, eine Wursthüllenbremse sowie ein Verfahren zum Einstellen einer solchen Wursthüllenbremse bereitzustellen, die es ermöglichen, die Bremsspannung von Hand ohne Werkzeug einzustellen, wobei gleichzeitig sichergestellt wird, dass sich die Wursthüllenbremse während des Betriebs, insbesondere durch die Massenträgheit, nicht verstellt.

Erfindungsgemäß wird diese Aufgabe durch die Merkmale der Ansprüche 1 und 11 gelöst.

Erfindungsgemäß weist die Wursthüllenbremse ein Verriegelungselement zwischen der inneren und der äußeren Schale auf, wobei das Verriegelungselement entweder mit der inneren oder äußeren Schale verbunden ist und in einer Verriegelungsposition einen Form- und/oder Reibschluss mit der jeweils anderen Schale erzeugt. Die Wursthüllenbremse umfasst dabei auch eine Betätigungseinrichtung zum Aufheben des Form- oder Reibschlusses. Die Betätigungseinrichtung ist entweder Teil des Verriegelungselements oder aber mit diesem verbunden.

Im Betrieb befindet sich also das Verriegelungselement in der Verriegelungsposition und verhindert so die durch Massenträgheit ungewollte Verstellung der relativen Position der Schalen zueinander in Axialrichtung, d. h. insbesondere das Verdrehen der Schalen gegeneinander und somit das Verstellen der Bremskraft. Durch den Form- oder Reibschluss kann also ein Verdrehen der Schalen gegeneinander um deren Mittelachse verhindert werden. Somit ist ein einfaches Einstellen der Bremswirkung ohne Werkzeug möglich, vorzugsweise in Verbindung mit einer angetriebenen Wursthüllenbremse, die sich zusammen mit dem Füllrohr zum Erzeugen einer Abdrehstelle um die Mittelachse dreht. Die Wursthüllenbremse kann jedoch auch eine nicht angetriebene Wursthüllenbremse sein. Über die Betätigungseinrichtung kann die Wursthüllenbremse auf einfache Art und Weise von Hand entriegelt und die Bremsspannung eingestellt werden. Das Verriegelungselement ermöglicht gleichzeitig ein Aufrechterhalten der eingestellten Bremsspannung für verschiedene Kaliber, z. B. durch die Verwendung einer jeweils eigenen Darmbremse für jedes Kaliber. Die eingestellte Bremsvorspannung kann auch beim Ausbau der Bremse aufrechterhalten werden. Dabei kann die gesamte Darmbremse im Bremsringgetriebe mit einer Schnappverbindung arretiert werden. Insgesamt ergibt sich eine einfache Montage und Demontage. Ebenfalls ergibt sich eine verbesserte Hygienesituation infolge einfacher Reinigungsmöglichkeit. Eine sichere Arretierung der Einstellung über Form- oder Reibschluss ist möglich.

Gemäß einer bevorzugten Ausführungsform ist das Verriegelungselement ein federndes oder elastisches Element. Als elastisches Element eignet sich beispielsweise auch ein Element aus einem elastischen Material, wie z. B. Gummi, in das ein stabilisierendes Element eingebracht ist, wie beispielsweise ein Stift. Mit entsprechenden Verriegelungselementen kann auf einfache Art und Weise zwischen einer Verriegelungsposition und einer Nichtverriegelungsposition durch Betätigen einer Betätigungseinrichtung gewechselt werden.

Es ist auch möglich, dass eine der Schalen aus einem flexiblen Werkstoff ausgebildet ist, so dass das Verriegelungselement in der Schale integriert ist, d. h. einstückig mit der Schale ausgebildet ist. Eine solche Vorrichtung kann besonders einfach gefertigt werden.

Gemäß einer bevorzugten Ausführungsform ist die Position der Schalen in Axialrichtung zueinander mittels Gewinde verstellbar, derart, dass durch Drehen der Schalen gegeneinander die Verspannung des Bremsringes einstellbar ist, wobei in der Verriegelungsposition die Schalen nicht gegeneinander gedreht werden können. Das heißt, dass die Schalen sich während des Betriebs einer angetriebenen Darmbremse nicht gegeneinander verdrehen und auch im Stillstand nicht gegeneinander von Hand verdreht werden können.

Vorzugsweise hat das Verriegelungselement einen Abschnitt, der in der Verriegelungsposition in eine Aussparung, die dann in der ersten inneren oder äußeren Schale ausgebildet ist, einrastet und somit einen Formschluss bildet. Es ist aber auch möglich, dass das Verriegelungselement einen Abschnitt aufweist, der in der Verriegelungsposition auf einen Reibungsbereich, der an der inneren oder äußeren Schale angeordnet ist, drückt, wobei dann ein Reibschluss zwischen dem Abschnitt und dem Reibungsbereich gebildet wird. Die Reibung zwischen dem Abschnitt und dem Reibungsbereich ist so hoch, dass die Schalen zueinander ausreichend fixiert sind und sich die Bremskraft während des Betriebs nicht verstellt und auch von Hand nicht verstellbar ist.

Zum Ändern der Einstellung der Bremskraft muss die Betätigungseinrichtung betätigt werden, insbesondere mittels Fingerkraft. Dies kann durch Drücken oder Ziehen der Betätigungseinrichtung auf einfache Art und Weise erfolgen. Hier ist kein Spezialwerkzeug wie im Stand der Technik notwendig.

Damit das Verriegelungselement in die entsprechende Schale einrasten kann, sind mehrere Aussparungen, z. B. in Form von Kerben, Bohrungen, Nuten, gleichmäßig verteilt um den Umfang der inneren oder äußeren Schale angeordnet. Somit kann das Verriegelungselement, wenn die Betätigungseinrichtung nicht mehr betätigt, z. B. gedrückt wird, an der nächstmöglichen Stelle, z. B. durch Weiterdrehen einrasten. Alternativ können mehrere Reibungsbereiche, vorteilhafterweise ein durchgängiger Reibungsbereich, am Umfang der inneren oder äußeren Schale angeordnet sein. Wird die Betätigungseinrichtung nicht mehr betätigt, so kann dann das Verriegelungselement an der nächstmöglichen Stelle einen Reibschluss mit der Schale aufbauen.

Gemäß einer besonders bevorzugten Ausführungsform ragt die innere Schale mindestens 2 mm im fertig montierten Betriebszustand aus der äußeren Schale hervor, also mindestens soweit, dass der hervorstehende Abschnitt gut von Hand gegriffen werden kann, bevorzugt mindestens 1cm. Somit kann die innere Schale über diesen Bund mit den Fingern gefasst werden. In diesem Bereich ist auch eine Öffnung vorgesehen, durch die das Betätigungselement freigelegt wird und somit betätigt werden kann. Diese Kombination ist sehr vorteilhaft, da während die äußere Schale umfasst werden kann, um beispielsweise die Schalen gegeneinander zu verdrehen, gleichzeitig mit einem Finger die Betätigungseinrichtung betätigt werden kann, um die Bremse zu entriegeln. Wenn in diesem hervorstehenden Bereich bzw. Bund der inneren Schale mindestens eine Sichtöffnung vorgesehen ist, kann die Sicht zum Füllrohr sichergestellt werden. Dazu sollte dann die innere Schale mindestens 5mm überstehen.

Bei dem erfindungsgemäßen Verfahren zum Einstellen einer Wursthüllenbremse wird zunächst das Verriegelungselement durch Betätigen der Betätigungseinrichtung entriegelt, wodurch der Form- oder Reibschluss zwischen dem Verriegelungselement und der inneren oder äußeren Schale aufgehoben wird. Nach dem Entriegeln kann dann die Bremsspannung eingestellt werden, indem die relative Position der Schalen in Axialrichtung zueinander geändert wird, insbesondere durch Drehen der Schalen gegeneinander. Durch Verspannen des Bremsrings kann der Durchmesser der Dichtlippe verändert werden und somit die Bremskraft eingestellt werden. Anschließend kann das Verriegelungselement wieder verriegelt werden, wobei das Verriegelungselement mit der inneren oder äußeren Schale einen Form- oder Reibschluss erzeugt derart, dass sich die relative Position der Schalen zueinander in Axialrichtung nicht mehr veränderbar ist, insbesondere dass die Schalen nicht mehr gegeneinander verdreht werden können.

Gemäß der vorliegenden Erfindung wird das Betätigungselement zum Einstellen der Bremskraft weiter betätigt und zum Verriegeln nicht mehr betätigt. Ein solches Verfahren ermöglicht maximale Sicherheit.

Die Betätigungseinrichtung kann insbesondere mittels Fingerkraft, insbesondere durch Drücken oder Ziehen betätigt werden. Die Kraft dazu beträgt weniger als 100 N, bzw. ist so gering, dass kein besonderes Werkzeug erforderlich ist.

In der Verriegelungsposition können die Schalen vorzugsweise nicht mehr gegeneinander verdreht werden, d. h. nicht mittels Gewinde verstellt werden. Es ist jedoch auch möglich, dass gemäß einem anderen Ausführungsbeispiel die relative Position der äußeren und inneren Schale nicht mittels Gewinde verstellt wird, sondern mittels aufeinanderliegenden Gleitflächen. Es ist dann vorteilhaft, wenn das Verriegelungselement derart ausgebildet ist, dass sich ein Form- oder Reibschluss in der Verriegelungsposition ergibt, so dass die Schalen zusätzlich oder alternativ in Axialrichtung fixiert sind. Dazu sind dann mehrere in Axialrichtung hintereinander angeordnete Arettierungen z.B. Aussparungen oder eine sich in Axialrichtung erstreckende Reibfläche auf der entsprechenden Schale vorgesehen.

Die vorliegende Erfindung wird nachfolgend unter Bezugnahme der folgenden Figuren näher erläutert.
- Fig. 1: zeigt eine perspektivische Darstellung einer ersten Ausführungsform gemäß der vorliegenden Erfindung.
- Fig. 2: zeigt einen Längsschnitt durch das in Fig. 1 gezeigte Ausführungsbeispiel in einer Verriegelungsposition.
- Fig. 3: zeigt die in Fig. 2 gezeigte Aufführungsform in einer entriegelten Position.
- Fig. 4: zeigt eine weitere perspektivische Darstellung gemäß der ersten Ausführungsform der vorliegenden Erfindung.
- Fig. 5: zeigt einen Längsschnitt durch eine Wursthüllenbremse gemäß einer ersten Ausführungsform der vorliegenden Erfindung.
- Fig. 6: zeigt einen Längsschnitt durch eine zweite Ausführungsform gemäß der vorliegenden Erfindung in einer Verriegelungsposition.
- Fig. 7: zeigt einen Längsschnitt durch eine Wursthüllenbremse gemäß einem dritten Ausführungsbeispiel in einer Verriegelungsposition.
- Fig. 8: zeigt die in Fig. 7 gezeigte Wursthüllenbremse in einer entriegelten Position.
- Fig. 9: zeigt das in Fig. 7 und 8 gezeigte Ausführungsbeispiel in perspektivischer Darstellung.
- Fig. 10: zeigt einen Längsschnitt durch eine Wursthüllenbremse gemäß einem vierten Ausführungsbeispiel der vorliegenden Erfindung in einer Verriegelungsposition.
- Fig. 11: zeigt die in Fig. 10 gezeigte Wursthüllenbremse in einer entriegelten Position.

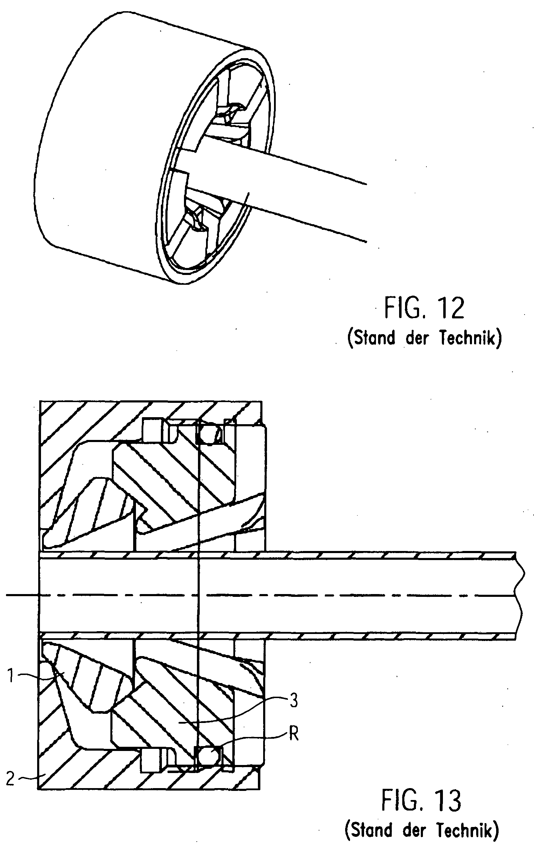

- Fig. 12: zeigt eine Wursthüllenbremse in perspektivischer Darstellung gemäß dem Stand der Technik.
- Fig. 13: zeigt einen Längsschnitt durch eine Wursthüllenbremse gemäß dem Stand der Technik.

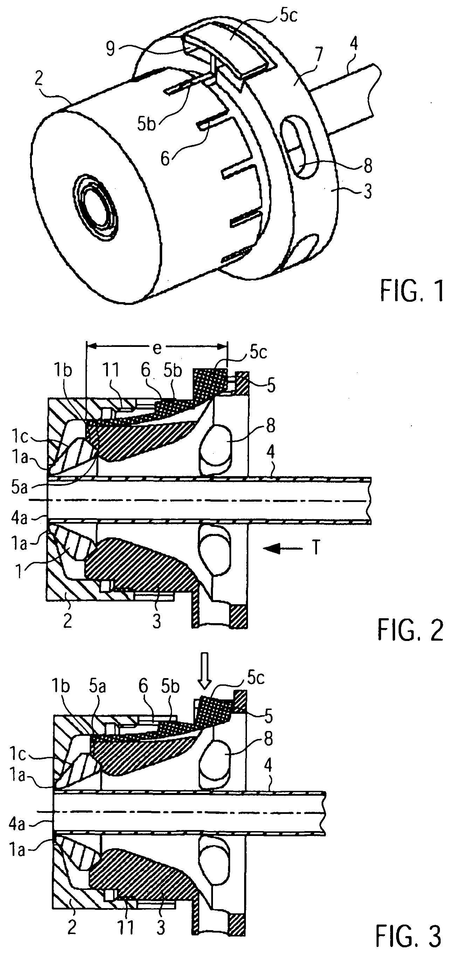

Fig. 1 bis 4 zeigen ein erstes Ausführungsbeispiel einer Wursthüllenbremse gemäß der vorliegenden Erfindung. Mit 4 ist ein Füllrohr bezeichnet, über das in bekannter Weise pastöse Masse in eine Wursthülle gefördert werden soll, die über das Füllrohr 4 gezogen ist. Das Füllrohr wird über einen nicht dargestellten Trichter und eine nicht dargestellte Portioniervorrichtung portionsweise mit pastöser Masse beschickt, wie allgemein bekannt ist und hier nicht mehr erläutert wird. Bei der maschinellen Wurstproduktion wird zunächst die Wursthülle auf das Füllrohr 4 an seinem freien Ende 4a aufgebracht. Dann wird in bekannter Weise die Wursthüllenbremse am Füllrohrende 4a positioniert. Das Füllrohr 4 kann je nach Ausführungsform drehbar gelagert und gegebenenfalls über einen nicht dargestellten Antrieb um die Mittelachse L angetrieben werden, um eine Abdrehstelle zu erzeugen. Die erfindungsgemäße Wursthüllenbremse kann aber auch eine nicht angetriebene Wursthüllenbremse sein.

Die Wursthüllenbremse umfasst eine innere Schale 3 und eine äußere Schale 2, zwischen denen der elastische Bremsring 1, z.B. ein Bremsgummi, verspannt ist. Die Schalen 2,3 können den Bremsring axial und / oder radial verspannen. Der Bremsring 1 ist konzentrisch zum Füllrohr 4 angeordnet. Die Schalen 2 und 3 sind ebenfalls konzentrisch zum Füllrohr 4 angeordnet. Der Bremsring ist zwischen den Schalen 2, 3 eingelegt. Der Bremsring 1 weist einen im Wesentlichen konischen Schnitt auf und drückt mit seiner Dichtlippe 1a die Wursthülle auf das Füllrohr 4. Der Bremsring 1 ist mit seiner Dichtlippe 1a schräg nach innen zum Füllrohr gerichtet. Der Bremsring 1 weist an seinem breiteren Ende eine schräge Endfläche 1 b auf, die auf einer schrägen Fläche der Schale 3 zu liegen kommt. Die Schale 2 drückt auf die obere Fläche 1 b des konischen Bremsrings 1. Durch Verspannen des Bremsrings zwischen den Schalen 2 und 3, d. h. durch Ändern der relativen Position der Schalen 2, 3 zueinander in Axialrichtung kann der Bremsdruck und somit der Durchmesser der Dichtlippe 1a verändert und eingestellt werden. Vorzugsweise werden die Schalen über ein hier nur schematisch dargestelltes Gewinde 11 verstellt, indem die beiden Schalen 2, 3 gegeneinander gedreht werden.

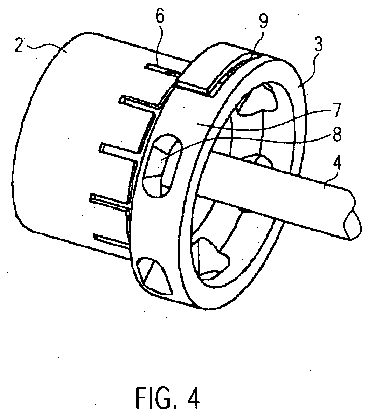

Die Schalen 2 und 3 sind, wie insbesondere aus den Fig. 1 und 4 hervorgeht, derart ausgebildet, dass im fertig montierten Betriebszustand die innere Schale 3 aus der äußeren Schale 2 mindestens 2 mm, vorzugsweise mindestens 1cm, hervorragt. Wie aus Fig. 1 und 4 hervorgeht, weist in diesem Bereich die innere Schale 3 z.B. zumindest abschnittsweise einen größeren Durchmesser auf als die äußere Schale 2. Zum Verdrehen der Schalen 2, 3 kann somit die innere Schale 3 gut umfasst werden. Die innere Schale 3 weist in dem Bereich, der über die äußere Schale 2 hervorragt, mehrere Sichtöffnungen 8 auf, über die die Sicht zum Füllrohr gewährleistet wird.

Wie besonders gut aus den Fig. 2 und 3 hervorgeht, ist zwischen den Schalen 2 und 3 ein Verriegelungselement 5 vorgesehen. Das Verriegelungselement 5 ist insbesondere als federndes oder aber elastisches Element ausgebildet. Als Material für das federnd ausgebildete Element 5 ist beispielsweise Federstahl, Kunststoff oder eine Elastomer geeignet. In das elastische Material kann darüber hinaus auch ein Verstärkungselement, z. B. ein Stift, eingebracht werden. Das Verriegelungselement 5 ist z. B. durch Kleben, Verschrauben, Nieten, Vergießen fest mit der inneren Schale 3 verbunden. Das Verriegelungselement 5 hat eine längliche Erstreckung und weist eine derartige Länge I auf, so dass eine elastische Verformung möglich ist. Die Breite des Verriegelungselements (Abmessung senkrecht zur dargestellten Länge L) und die sich in Radialrichtung erstreckende Höhe ist werkstoffbedingt zu gestalten.

Das Verriegelungselement 5 weist einen Abschnitt 5b auf, der als Vorsprung ausgebildet ist, d. h. sich hier von dem Verriegelungselement 5 von der Mittelachse L radial nach außen erstreckt. Zum Erzeugen eines Formschlusses zwischen dem Abschnitt 5b des Verriegelungselements 5 und der äußeren Schale 2 weist die äußere Schale mindestens eine Aussparung 6 beispielsweise in Form einer Nut 6, Kerbe, Bohrung etc. auf, in die der Abschnitt 5b einrasten kann, um einen Formschluss zu erzeugen. Wie aus den Fig. 1 und 2 hervorgeht, ist der Abschnitt 5b des Verriegelungselementes in einer Verriegelungsposition in der Aussparung 6 eingerastet. Durch die formschlüssige Verbindung der Seitenkanten des Abschnitts 5b sowie der seitlichen Innenkanten der Aussparung sind die Schalen 2, 3 vor Verdrehen zueinander gesichert. Die Länge einer Aussparung 6 in Axialrichtung ist größer als die Länge des Abschnitts 5b, so dass gewährleistet ist, dass bei unterschiedlichen Positionen der Schalen zueinander der Abschnitt 5b in der Aussparung einrasten kann. Vorteilhafterweise sind bei diesem Ausführungsbeispiel eine Vielzahl von Aussparungen 6 gleichmäßig am inneren Umfang der äußeren Schale 2 angeordnet. Das Verdrehen der beiden Schalen während des Produktionsbetriebes wird also durch das eingerastete Verriegelungselement verhindert. Eine Bewegung der Schalen in Axialrichtung wird durch das Gewinde verhindert.

Ferner umfasst das Verriegelungselement 5 eine Betätigungseinrichtung 5c, die wie hier gezeigt ein Teil des Verriegelungselements 5 ist und einstückig mit dem Verriegelungselement ausgebildet ist oder an das Verriegelungselement angeformt ist. Über die Betätigungseinrichtung 5c kann der Formschluss zwischen dem Abschnitt 5b sowie der Aussparung 6 aufgehoben werden, indem beispielsweise auf die Betätigungseinrichtung 5c gedrückt wird, wie insbesondere aus Fig. 3 hervorgeht. Durch Drücken auf das federnde oder elastische Element 5 bewegt sich der Abschnitt 5b nach innen zur Längsachse L, so dass der Formschluss aufgehoben wird. Der Abschnitt 5b greift dann nicht mehr in die Aussparung 6 ein. Somit können die Schalen 2, 3 wieder gegeneinander verdreht werden, um die Vorspannung des Bremsrings 1 einzustellen.

In diesem Ausführungsbeispiel weist der Abschnitt der inneren Schale 3, der über die äußere Schale 2 hinausragt, eine Öffnung 9 auf, durch die die Betätigungseinrichtung 5c freigelegt wird. Wie insbesondere aus Fig. 1 hervorgeht, weist dabei die Betätigungseinrichtung 5c einen flächigen oberen Abschnitt auf, der einfach durch einen Finger nach unten gedrückt werden kann. Die innere Schale kann somit über den Bundbereich 7 mit den Fingern gefasst und gedreht werden, während gleichzeitig auf die Betätigungseinrichtung 5c gedrückt wird. Wird die Betätigungseinrichtung 5c nicht mehr gedrückt, rastet das Verriegelungselement 5, d. h. der Abschnitt 5b, an der nächstmöglichen Stellen 6 wieder ein, wie in Fig. 2 dargestellt ist.

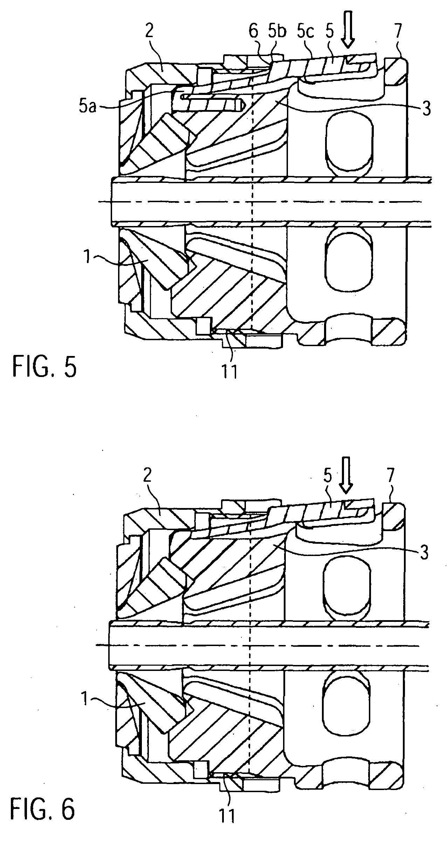

Das in Fig. 5 gezeigte Ausführungsbeispiel entspricht dem ersten Ausführungsbeispiel in verriegelter Position, wobei auch hier ein Abschnitt 5b einen Formschluss mit einer Aussparung 6 erzeugt. In Fig. 5 kann deutlich erkannt werden, dass das Verriegelungselement 5 über den Befestigungsabschnitt 5a in der inneren Schale 3 verankert ist. Wie aus Fig. 6 hervorgeht, kann das Verriegelungselement 5 auch einstückig mit der inneren Schale 3 ausgebildet sein. Dazu ist die innere Schale 2 aus einem elastischen Material, z. B. Kunststoff oder Federstahl gefertigt.

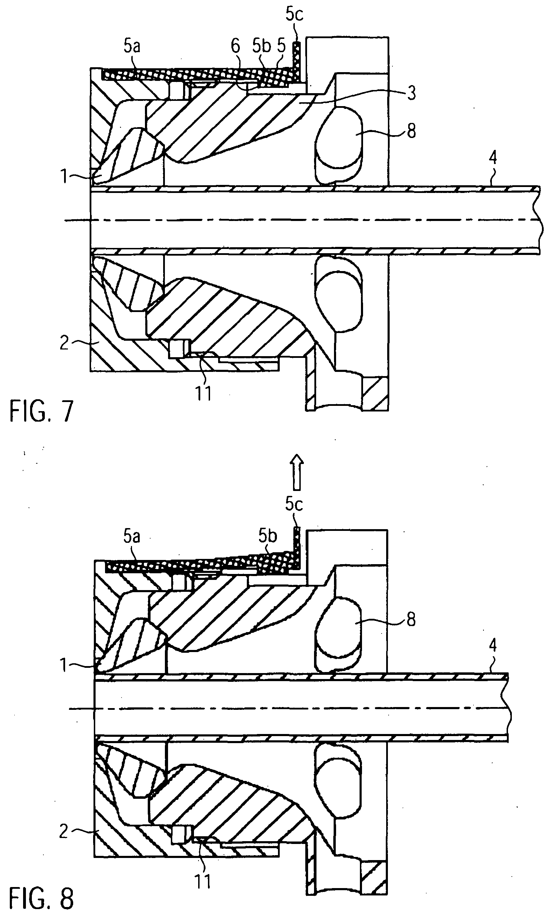

Fig. 7 bis 9 zeigen ein drittes Ausführungsbeispiel der vorliegenden Erfindung. Dieses Ausführungsbeispiel entspricht der Wursthüllenbremse, wie sie im Zusammenhang mit dem ersten Ausführungsbeispiel beschrieben wurde mit der Ausnahme, dass hier nun das Verriegelungselement 5 nicht an der inneren Schale 3 sondern an der äußeren Schale 2 befestigt ist. Auch hier ist das Verriegelungselement mit dem Befestigungsabschnitt 5a an der äußeren Schale 2 befestigt. Das Verriegelungselement 5 weist auch hier einen Vorsprung 5b auf, der in eine entsprechende Arretierung 6 in der inneren Schale einrasten kann, um so einen Formschluss zwischen dem Verriegelungselement 5 und der entsprechenden Aussparung 6 herzustellen. Wie zuvor, bilden auch hier die äußeren Seitenkanten des Abschnitts 5b einen Formschluss mit den inneren Seitenkanten der Aussparung 6, derart, dass die Schalen 2, 3 nicht gegeneinander um die Längsachse L verdreht werden können. Wie bei dem ersten Ausführungsbeispiel weist auch hier das Verriegelungselement 5 eine Betätigungseinrichtung 5c auf zum Aufheben des Formschlusses. Wie insbesondere aus Fig. 8 hervorgeht, kann das Betätigungselement 5c, das auch hier durch eine Öffnung 9 im Bundbereich freigelegt ist, durch einen Finger nach oben gezogen werden, wie durch den Pfeil in Fig. 8 dargestellt ist. Dadurch bewegt sich der Abschnitt 5b aus der Aussparung 6, so dass die beiden Schalen 2, 3 wieder relativ zueinander bewegt werden können, indem die Schalen gegeneinander um die Achse L verdreht werden.

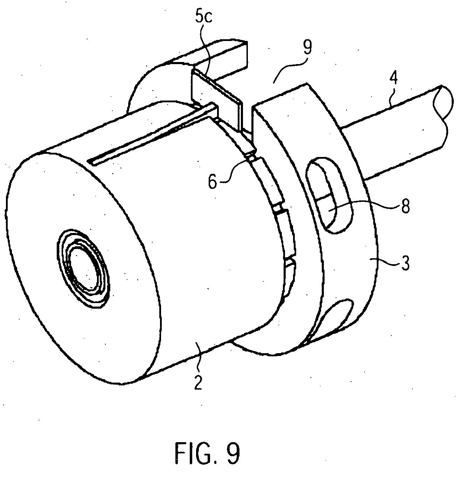

Auch bei diesem Ausführungsbeispiel sind eine Vielzahl von Aussparungen 6 um den Außenumfang der inneren Schale 3 angeordnet, wie am besten aus Fig. 9 hervorgeht. Somit kann der Abschnitt 5b des Verriegelungselementes 5, wenn die Betätigungseinrichtung 5c nicht mehr angehoben wird, an der nächstmöglichen Stelle wieder einrasten.

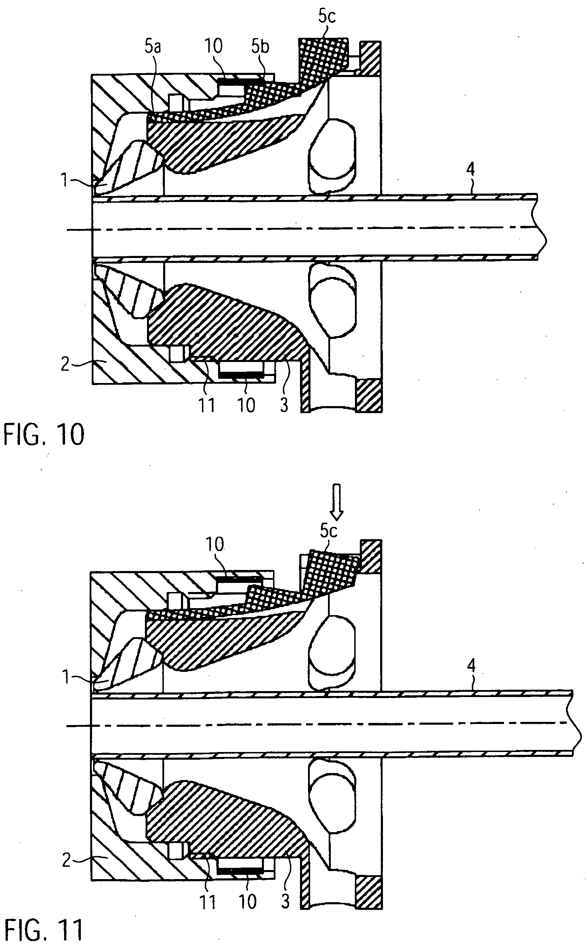

Fig. 10 und 11 zeigen eine vierte Ausführungsform der vorliegenden Erfindung, die dem ersten Ausführungsbeispiel entspricht mit der Ausnahme, dass hier ein Reibschluss zwischen dem Verriegelungselement 5 und der inneren oder äußeren Schale erzeugt wird. Bei diesem Ausführungsbeispiel ist wie im ersten Ausführungsbeispiel, das Verriegelungselement 5 an der inneren Schale 3 befestigt. Anstelle der Aussparung 6 ist hier im Innenbereich der äußeren Schale 2 ein Reibungsbereich 10 vorgesehen. Hier wird z. B. ein Werkstoff 10, der am inneren Umfang der Schale 2 umläuft, aufgebracht. Der Werkstoff ist so aufgebaut, dass es zu einer hohen Reibung, d. h. zu einem Reibschluss zwischen Verriegelungselement 5 und dem Reibungsbereich 10 kommt. Der Reibungsbereich 10 ist beispielweise aus einem Elastomer gefertigt, während das Verriegelungselement 5 aus einem federnden oder elastischen Material, wie zuvor beschrieben, gebildet ist. In gleicher Weise wie bei dem zuvor beschriebenen Ausführungsbeispiel, kann durch Drücken der Betätigungseinrichtung 5c der Reibschluss, wie insbesondere aus Fig. 11 hervorgeht, aufgehoben werden, so dass dann die beiden Schalen wieder relativ zueinander bewegt werden können, insbesondere durch Drehen der Schalen 2, 3 gegeneinander. Anstelle des durchgehend umlaufenden Reibungsbereiches können auch mehrere nebeneinander gleichmäßig um den Umfang verteilte Reibungsbereiche vorgesehen sein.

Das in den Fig. 10 und 11 gezeigte Ausführungsbeispiel zur Erzeugung eines Reibschlusses kann auch entsprechend dem in Fig. 7 und 8 gezeigten Ausführungsbeispiel modifiziert werden, wobei dann das Verriegelungselement 5 an der äußeren Schale 2 angeordnet ist und der Reibungsbereich am Außenumfang der inneren Schale 3 anstelle der Aussparungen 6.

Die zuvor beschriebenen Ausführungsbeispiele wurden im Zusammenhang mit einem Gewinde 11 beschrieben, wobei die relative Position der beiden Schalen 2, 3 zueinander durch Verdrehen der Schalen erzeugt wird. Es ist jedoch auch möglich, dass die axiale Verstellung der beiden Schalen 2, 3 über zwei aneinander angrenzenden Gleitflächen der beiden Schalen erfolgt. Dazu sind dann mehrere in Axialrichtung hintereinander angeordnete Arettierungen z.B. Aussparungen oder eine sich in Axialrichtung erstreckende Reibfläche auf der entsprechenden Schale vorgesehen. Das Verriegelungselement kann dann mit der entsprechenden inneren oder äußeren Schale ebenfalls einen Form- oder Reibschluss erzeugen derart, dass eine Bewegung der Schalen 2, 3 in Axialrichtung nicht mehr möglich ist.

Nachfolgend wird das erfindungsgemäße Verfahren unter Bezugnahme der Fig. 1 bis 4 näher erläutert. Zum Einstellen der Wursthüllenbremse muss zunächst das Verriegelungselement 5 durch Betätigen der Betätigungseinrichtung 5c entriegelt werden. Dazu kann der überstehende Bundbereich 7 umgriffen werden, wobei die Betätigungseinrichtung 5c in Pfeilrichtung nach unten gedrückt wird.

Alternativ zu der in Fig. 1 gezeigten Betätigungseinrichtung 5c kann auch ein Druckknopf (rundes Teil) angebracht werden, der bei Betätigung die formschlüssige Verbindung oder reibschlüssige Verbindung löst. Zum Lösen der formschlüssigen oder reibschlüssigen Verbindung ist eine Kraft von ≦ 100 N notwendig. Während die Betätigungseinrichtung weiter gedrückt bleibt, können nun die Schalen gegeneinander gedreht werden, um eine bestimmte Vorspannung des Bremsrings 1 einzustellen.

Ist die gewünschte Vorspannung erreicht, wird die Betätigungseinrichtung 5c nicht weiter gedrückt. Durch kurzes Weiterdrehen kann dann der Abschnitt 5b an der nächstmöglichen Stelle 6 wieder in eine Verriegelungsposition (Fig. 2) einrasten. Die Schalen sind nun vor gegenseitigem Drehen um die Längsachse L gesichert. Durch das Gewinde 11 wird ein Halt in Axialrichtung gewährleistet. Somit kann die eingestellte Bremsvorspannung für verschiedene Kaliber aufrecht erhalten werden. Das heißt, für jedes Kaliber kann eine eigene Darmbremse verwendet werden. Die eingestellte Bremsvorspannung kann auch beim Ausbau der Bremse aufrecht erhalten werden. Die gesamte Darmbremse wird dabei ins Bremsringgetriebe mit einer Schnappverbindung arretiert.

Das zuvor beschriebene Verfahren funktioniert in gleicher Weise mit den anderen Ausführungsbeispielen, nur dass bei dem in Fig. 7 bis 9 dargestellten Ausführungsbeispiel das Betätigungselement angehoben werden muss und bei dem in den Fig. 10 und 11 gezeigten Ausführungsbeispiel zum Arretieren ein Reibschluss erzeugt wird.

## Patentansprüche

1. Wursthüllenbremse mit
einem Bremsring (1),
einer inneren und einer äußeren Schale (3, 2), zwischen denen der Bremsring (1) verspannt ist, und einem Verriegelungselement (5), **dadurch gekennzeichnet, dass**
das Verriegelungselement (5), zwischen der inneren und der äußeren Schale (3, 2) angeordnet ist, mit der inneren oder der äußeren Schale (2, 3) verbunden ist und in einer Verriegelungsposition einen Form- oder Reibschluss mit der jeweils anderen Schale erzeugt, derart, dass im Betrieb ein Verstellen der relativen Position der Schalen in Axialrichtung verhindert wird und die Schalen nicht mehr gegeneinander verdreht werden können und eine Betätigungseinrichtung (5c) vorgesehen ist, zum Aufheben des Form- oder Reibschlusses.

2. Wursthüllenbremse nach Anspruch 1, **dadurch gekennzeichnet, dass** das Verriegelungselement (5) ein federndes oder elastisches Element ist.

3. Wursthüllenbremse nach Anspruch 1 oder 2, **dadurch gekennzeichnet, dass** eine der Schalen (2, 3) aus einem flexiblen Werkstoff ausgebildet **ist und das** Verriegelungselement (5) in der Schale integriert ist.

4. Wursthüllenbremse nach mindestens einem der Ansprüche 1 bis 3, **dadurch gekennzeichnet, dass** die Position der Schalen (3, 2) zueinander in Axialrichtung mittels Gewinde verstellbar ist, derart, dass durch Drehen der Schalen (3, 2) gegeneinander die Verspannung des Bremsrings einstellbar ist, wobei in der Verriegelungsposition die Schalen (3, 2) nicht gegeneinander gedreht werden können.

5. Wursthüllenbremse nach mindestens einem der Ansprüche 1 bis 4, **dadurch gekennzeichnet, dass** das Verriegelungselement (5) einen Abschnitt (5b) aufweist, der in eine Aussparung (6), die in der inneren oder äußeren Schale (3, 2) ausgebildet ist, einrastet und somit einen Formschluss bildet.

6. Wursthüllenbremse nach mindestens einem der Ansprüche 1 bis 5, **dadurch gekennzeichnet, dass** das Verriegelungselement (5) einen Abschnitt (5b) aufweist, der in der Verriegelungsposition auf einen Reibungsbereich (10), der in der entsprechenden Schale angeordnet ist, drückt, wobei ein Reibschluss zwischen dem Abschnitt (5b) und dem Reibungsbereich (10) gebildet wird.

7. Wursthüllenbremse nach mindestens einem der Ansprüche 1 bis 6, **dadurch gekennzeichnet, dass** die Betätigungseinrichtung (5c) mittels Fingerkraft betätigt werden kann, insbesondere durch Drücken oder Ziehen.

8. Wursthüllenbremse nach Anspruch 5 oder 6, **dadurch gekennzeichnet, dass** mehrere Aussparungen (6) gleichmäßig verteilt um den Umfang der inneren oder äußeren Schale angeordnet sind, oder mehrere Reibungsbereiche (10) oder ein durchgängiger Reibungsbereich (10) um den Umfang der inneren oder äußeren Schale angeordnet sind.

9. Wursthüllenbremse nach mindestens einem der Ansprüche 1 bis 8, **dadurch gekennzeichnet, dass** die innere Schale (3) aus der äußeren Schale (2) hervorragt und insbesondere eine Öffnung (9) aufweist, durch die die Betätigungseinrichtung freigelegt wird und so betätigt werden kann.

10. Wursthüllenbremse nach mindestens einem der Ansprüche 1 bis 8, **dadurch gekennzeichnet, dass** die innere Schale (3) aus der äußeren Schale (2) hervorragt und in diesem Bereich mindestens eine Sichtöffnung (8) vorgesehen ist.

11. Verfahren zum Einstellen einer Wursthüllenbremse nach mindestens einem der Ansprüche 1 bis 10 mit folgenden Schritten:
a) Entriegeln des Verriegelungselements (5) durch Betätigung der Betätigungseinrichtung (5c), wodurch der Form- oder Reibschluss zwischen dem Verriegelungselement (5), das mit der inneren oder äußeren Schale verbunden ist, und der jeweils anderen Schale (3, 2) aufgehoben wird,
b) Einstellen der Vorspannung des Bremsrings (1) durch Ändern der relativen Position der Schalen zueinander in Axialrichtung, insbesondere durch Drehen der Schalen (3, 2) gegeneinander, und
c) Verriegeln des Verriegelungselementes (5), wobei das Verriegelungselement (5) mit der inneren oder äußeren Schale (3, 2) den Form- oder Reibschluss erzeugt derart, dass im Betrieb ein Verstellen der relativen Position der Schalen (3, 2) in Axialrichtung zueinander verhindert wird, und die Schalen nicht mehr gegeneinander verdreht werden können.

12. Verfahren nach Anspruch 11, **dadurch gekennzeichnet, dass** in Schritt b) die Betätigungseinrichtung (5c) weiter betätigt wird und in Schritt c) die Betätigungseinrichtung (5c) nicht betätigt wird.

13. Verfahren nach Anspruch 11 oder 12, **dadurch gekennzeichnet, dass** die Betätigungseinrichtung (5c) mittels Fingerkraft, insbesondere durch Drücken oder Ziehen der Betätigungseinrichtung betätigt wird.

14. Verfahren nach mindestens einem der Ansprüche 11 bis 13, **dadurch gekennzeichnet, dass** die Kraft für das Betätigen der Betätigungseinrichtung (5c) ≦ 100 N beträgt.

## Claims

1. A casing brake comprising
a brake ring (1),
inner and outer shells (3, 2) between which the brake ring (1) is tensioned and a locking element (5) **characterized in that**,
the locking element (5) is provided between said inner and outer shells (3, 2), being connected to said inner or outer shell (2, 3) and establishing a positive or a frictional connection with the respective other shell at a locked position such that during operation a displacement of the relative position of the shells in axial direction is prevented and the shells cannot be rotated relative to one another and
an actuating device (5c) is provided for eliminating the positive or the frictional connection.

2. A casing brake according to claim 1, **characterized in that** the locking element (5) is a resilient or an elastic element.

3. A casing brake according to claim 1 or 2, **characterized in that** one of the shells (2, 3) is produced from a flexible material and that the locking element (5) is integrated in the shell.

4. A casing brake according to at least one of the claims 1 to 3, **characterized in that** the position which the shells (2, 3) occupy relative to one another in the axial direction can be adjusted by means of a thread such that the tension of the brake ring can be adjusted by rotating the shells (3, 2) relative to one another, such rotation of the shells (3, 2) relative to one another being excluded at the locked position.

5. A casing brake according to at least one of the claims 1 to 4, **characterized in that** the locking element (5) is provided with a portion (5b) which lockingly engages a recess (6) formed in the inner or outer shell (3, 2), thus establishing a positive connection.

6. A casing brake according to at least one of the claims 1 to 5, **characterized in that** the locking element (5) is provided with a portion (5b) which, when occupying the locked position, applies pressure to a friction area (10) provided in the respective shell, a frictional connection being thus established between said portion (5b) and said friction area (10).

7. A casing brake according to at least one of the claims 1 to 6, **characterized in that** the actuating device (5c) can be operated by the force of human fingers, especially by pressing or drawing.

8. A casing brake according to claim 5 or 6, **characterized in that** a plurality of recesses (6) is uniformly distributed over the circumference of the inner or outer shell, or that a plurality of friction areas (10) or one continuous friction area (10) are/is arranged so as to extend around the circumference of said inner or outer shell.

9. A casing brake according to at least one of the claims 1 to 8, **characterized in that** the inner shell (3) projects beyond the outer shell (2) and has especially provided therein an opening (9) through which the actuating device is exposed and can be operated in this way.

10. A casing brake according to at least one of the claims 1 to 8, **characterized in that** the inner shell (3) projects beyond the outer shell (2) and that at least one sight opening (8) is provided in this area.

11. A method of adjusting a casing brake according to at least one of the claims 1 to 10, comprising the following steps:
a) unlocking the locking element (5) by operating the actuating device (5c), whereby the positive connection or the frictional connection between the locking element (5), which is connected to the inner or the outer shell, and the respective other shell (3, 2) is eliminated,
b) adjusting the pretension of the brake ring (1) by changing the position of the shells relative to one another in the axial direction, in particular by rotating the shells (3, 2) relative to one another, and
c) locking the locking element (5), said locking element (5) establishing then with the inner or outer shell (3, 2) the positive connection or the frictional connection such that during operation a displacement of the relative position of the shells (3, 2) in axial direction relative to one another can be prevented and the shells can no longer be rotated relative to one another.

12. A method according to claim 11, **characterized in that** in step b) the actuating device (5c) is operated still further and that in step c) the actuating device (5c) is not operated.

13. A method according to claim 11 or 12, **characterized in that** the actuating device (5c) is operated by means of the force of human fingers, in particular by means of pressing or drawing the actuating device.

14. A method according to at least on of the claims 11 to 13, **characterized in that** the force for operating the actuating device (5c) is ≤ 100 N.

## Revendications

1. Frein pour boyaux de saucisses avec
un anneau de freinage (1),
une coque intérieure et une coque extérieure (3, 2) entre lesquelles l'anneau de freinage (1) est serré, et un élément de verrouillage (5), **caractérisé en ce que**
l'élément de verrouillage (5) est disposé entre la coque intérieure et la coque extérieure (3, 2), est raccordé à la coque intérieure et la coque extérieure (2, 3) et forme, dans une position de verrouillage, une liaison positive ou par frottement avec l'autre coque respective, de telle sorte qu'un dérèglement des positions relatives des coques dans la direction axiale est empêché et que les coques ne peuvent plus être tournées l'une par rapport à l'autre, lors du fonctionnement et
un moyen d'actionnement (5c) est prévu pour neutraliser la liaison positive ou par frottement.

2. Frein pour boyaux de saucisses selon la revendication 1, **caractérisé en ce que** l'élément de verrouillage (5) est un élément élastique ou ayant les propriétés d'un ressort.

3. Frein pour boyaux de saucisses selon la revendication 1 ou 2, **caractérisé en ce que** l'une des coques (2, 3) est formée d'un matériau flexible et que l'élément de verrouillage (5) est intégré dans la coque.

4. Frein pour boyaux de saucisses selon au moins une des revendications 1 à 3, **caractérisé en ce que** la position des coques (3, 2) l'une par rapport à l'autre est réglable dans la direction axiale au moyen d'un filet, de telle manière qu'en tournant les coques (3, 2) l'une par rapport à l'autre, le serrage de l'anneau de freinage est ajustable, où, dans la position de verrouillage, les coques (3, 2) ne peuvent pas être tournées l'une par rapport à l'autre.

5. Frein pour boyaux de saucisses selon au moins une des revendications 1 à 4, **caractérisé en ce que** l'élément de verrouillage (5) comporte une section (5b) qui s'enclenche dans une cavité (6) formée dans la coque intérieure ou dans la coque extérieure (3, 2) et forme ainsi une liaison positive.

6. Frein pour boyaux de saucisses selon au moins une des revendications 1 à 5, **caractérisé en ce que** l'élément de verrouillage (5) comporte une section (5b) qui, dans la position de verrouillage, appuie sur une zone de friction (10) disposée dans la coque correspondante, formant ainsi une liaison par frottement entre la section (5b) et la zone de friction (10).

7. Frein pour boyaux de saucisses selon au moins une des revendications 1 à 6, **caractérisé en ce que** le moyen d'actionnement (5c) peut être actionné à la force des doigts, en particulier en appuyant ou en tirant.

8. Frein pour boyaux de saucisses selon la revendication 5 ou 6, **caractérisé en ce que** plusieurs cavités (6) sont uniformément réparties autour de la circonférence de la coque intérieure ou de la coque extérieure, ou que plusieurs zones de friction (10) ou une zone de friction (10) continue sont disposées autour de la circonférence de la coque intérieure ou de la coque extérieure.

9. Frein pour boyaux de saucisses selon au moins une des revendications 1 à 8, **caractérisé en ce que** la coque intérieure (3) dépasse de la coque extérieure (2) et, en particulier, comporte une ouverture (9) exposant le moyen d'actionnement qui peut ainsi être actionné.

10. Frein pour boyaux de saucisses selon au moins une des revendications 1 à 8, **caractérisé en ce que** la coque intérieure (3) dépasse de la coque extérieure (2) et comporte dans cette région au moins une ouverture d'observation (8).

11. Procédé de réglage d'un frein pour boyaux de saucisses selon au moins une des revendications 1 à 10 comportant les étapes consistant à :
a) déverrouiller l'élément de verrouillage (5) par actionnement du moyen d'actionnement (5c), moyennant quoi la liaison positive ou par frottement entre l'élément de verrouillage (5) raccordé à la coque intérieure ou la coque extérieure et respectivement l'autre coque (3, 2) est neutralisée,
b) régler la précontrainte de l'anneau de freinage (1) en modifiant la position relative des coques l'une par rapport à l'autre dans la direction axiale, en particulier par rotation des coques (3, 2) l'une par rapport à l'autre, et
c) verrouiller l'élément de verrouillage (5), où l'élément de verrouillage (5) forme la liaison positive ou par frottement avec la coque intérieure ou la coque extérieure (3, 2), de telle sorte qu'un dérèglement des positions relatives des coques dans la direction axiale soit empêché et que les coques ne puissent plus être tournées l'une par rapport à l'autre, lors du fonctionnement.

12. Procédé selon la revendication 11, **caractérisé en ce que** lors de l'étape (b) le moyen d'actionnement (5c) est encore actionné et à l'étape c) le moyen d'actionnement (5c) n'est pas actionné.

13. Procédé selon la revendication 11 ou 12, **caractérisé en ce que** le moyen d'actionnement (5c) peut être actionné à la force des doigts, en particulier en appuyant ou en tirant sur le moyen d'actionnement.

14. Procédé selon au moins une des revendications 11 à 13, **caractérisé en ce que** la force nécessaire à l'actionnement du moyen d'actionnement (5c) est ≤ 100 N.
